(19) Europäisches Patentamt
European Patent Office
Office européen des brevets

(11) **EP 4 361 958 A1**

(12) **EUROPEAN PATENT APPLICATION**
published in accordance with Art. 153(4) EPC

(43) Date of publication:
**01.05.2024 Bulletin 2024/18**

(51) International Patent Classification (IPC):
**G06T 17/20** [(2006.01)]

(21) Application number: **22827209.2**

(86) International application number:
**PCT/CN2022/091460**

(22) Date of filing: **07.05.2022**

(87) International publication number:
**WO 2022/267711 (29.12.2022 Gazette 2022/52)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **22.06.2021 CN 202110691334**

(71) Applicant: **Jingdong Kunpeng (Jiangsu) Technology Co., Ltd**
**Jiangsu 215500 (CN)**

(72) Inventors:
• **LIN, Jinbiao**
**Changshu, Jiangsu 215500 (CN)**
• **DING, Cong**
**Changshu, Jiangsu 215500 (CN)**
• **XU, Xinyu**
**Changshu, Jiangsu 215500 (CN)**
• **KONG, Qi**
**Changshu, Jiangsu 215500 (CN)**

(74) Representative: **Page White Farrer**
**Bedford House**
**21a John Street**
**London WC1N 2BF (GB)**

(54) **GROUND POINT CLOUD SEGMENTATION METHOD AND APPARATUS, AND AUTONOMOUS VEHICLE**

(57)     A ground point cloud segmentation method, a ground point cloud segmentation apparatus and an autonomous vehicle, which relate to the field of computers. The method comprises : dividing a region of interest into a plurality of grids, and putting point clouds in the region of interest into the corresponding grids (110); determining a plane equation corresponding to the point cloud in each grid (120); taking, as a central grid, a grid where a radar is located, and determining a ground equation of the central grid; marking the central grid as a ground grid, and according to the plane equation corresponding to the point cloud in each grid and the ground equation of the central grid, performing gradual outward diffusion from the central grid, and calculating a ground equation of each grid in the region of interest; and according to the ground equation of each grid, determining whether the point cloud in the grid is a ground point cloud (150). In this way, a ground equation is calculated for each grid, and it can be accurately determined whether a point cloud in a grid contains ground points or non-ground points according to a ground equation of the grid regardless of whether the grid is a ground grid or a non-ground grid.

110, a region of interest is divided into a plurality of grids, and point clouds in the region of interest are put into the corresponding grids

120, a plane equation is determined corresponding to the point cloud in each grid.

130, a grid where a radar which performs scanning to form the point clouds is located is taken as a center grid, and a ground equation of the center grid is determined

140, the central grid is marked as a ground grid, by using a breadth-first grid traversal policy, gradual outward diffusion is performed from the central grid and a ground equation of each grid in the region of interest is calculated

150, it is determined whether the point cloud in each grid is a ground point cloud according to the ground equation of each grid

Fig.1

# Description

## CROSS-REFERENCE TO RELATED APPLICATIONS

The present application is based on and claims the priority to the Chinese Patent Application No. 202110691334.8 filed on June 22, 2021, the present disclosure of which is incorporated by reference herein in its entirety.

## TECHNICAL FIELD

The present disclosure relates to the field of computers, and in particular, to a ground point cloud segmentation method, a ground point cloud segmentation apparatus, and an autonomous vehicle.

## BACKGROUND

Autonomous vehicles are equipped with various sensors to sense the surrounding environment and obstacles. For example, a radar mounted on an autonomous vehicle can scan to form point clouds, and the surrounding environment and obstacles can be sensed using the radar point clouds.

Before sensing surrounding obstacles by using the radar point clouds, ground points and non-ground points in the point clouds need to be distinguished first. In some related arts, it is determined whether a grid is a ground grid according to a plane equation of the point cloud of the grid, and all points within the ground grid are regarded as ground points and all points within a non-ground grid are regarded as non-ground points.

## SUMMARY

Some embodiments of the present disclosure provide a ground point cloud segmentation method, comprising:

dividing a region of interest into a plurality of grids, and putting point clouds in the region of interest into the corresponding grids;
determining a plane equation corresponding to the point cloud in each grid;
taking, as a central grid, a grid where a radar which performs scanning to form the point clouds is located, and determining a ground equation of the central grid;
marking the central grid as a ground grid, and according to the plane equation corresponding to the point cloud in each grid and the ground equation of the central grid, by using a breadth-first grid traversal policy, performing gradual outward diffusion from the central grid and calculating a ground equation of each grid in the region of interest; and
determining whether the point cloud in each grid is a ground point cloud according to the ground equation of each grid.

In some embodiments, the performing gradual outward diffusion from the central grid and calculating a ground equation of each grid in the region of interest comprises:

gradually diffusing outwards from the central grid, and for diffused adjacent grids, according to similarity between the ground equation of a grid closer to the central grid in the adjacent grids and the plane equation of a grid farther from the central grid in the adjacent grids, determining whether the grid farther from the central grid in the adjacent grids is a ground grid; and
determining the ground equation of the grid farther from the central grid in the adjacent grids according to whether the grid farther from the central grid in the adjacent grids is the ground grid.

In some embodiments, the determining whether the grid farther from the central grid in the adjacent grids is a ground grid comprises:

if the ground equation of the grid closer to the central grid in the adjacent grids is similar to the plane equation of the grid farther from the central grid in the adjacent grids, determining that the grid farther from the central grid in the adjacent grids is the ground grid;
wherein, if a deviation between a normal vector of the ground equation and a normal vector of the plane equation is within a tolerance range, and a deviation between an offset term of the ground equation and an offset term of the plane equation is within the tolerance range, the ground equation is considered similar to the plane equation.

In some embodiments, the determining the ground equation of the grid farther from the central grid in the adjacent grids comprises: if the grid farther from the central grid in the adjacent grids is the ground grid, letting the ground equation of the grid farther from the central grid in the adjacent grids be equal to the plane equation of the grid farther from the central grid in the adjacent grids, otherwise, letting the ground equation of the grid farther from the central grid in the adjacent grids be equal to the ground equation of the grid closer to the central grid in the adjacent grids.

In some embodiments, the determining whether the point cloud in each grid is a ground point cloud according to the ground equation of each grid comprises: if a distance from a point in a point cloud in a grid to the ground equation of the grid is smaller than a maximum distance from a ground point cloud to a ground equation, considering the point to be a ground point, otherwise, considering the point to be a non-ground point.

In some embodiments, the performing gradual outward diffusion from the central grid and calculating a ground equation of each grid in the region of interest comprises:

maintaining a first-in first-out queue, each grid in the region of interest in the queue maintaining a state quantity, the state quantity comprising: a first state indicating that the grid has been visited and is identified as a ground grid, a second state indicating that the grid has not been visited, and a third state indicating that the grid has been visited and is not identified as a ground grid;

adding the center grid $c_0$ to the queue, marking the state quantity of the center grid $c_0$ as the first state;

taking out a grid $c_i$ in a head of the queue, wherein an initial value of the grid $c_i$ is the central grid $c_0$;

selecting any grid $c_j$ adjacent to the grid $c_i$;

if the state quantity of the grid $c_j$ is the second state, adding the grid $c_j$ to a tail of the queue;

if the state quantity of the grid $c_j$ is not the first state, determining similarity between the ground equation of the grid $c_i$ and the plane equation of the grid $c_j$;

if the ground equation of the grid $c_i$ is similar to the plane equation of the grid $c_j$, marking the grid $c_j$ as the ground grid, setting the state quantity of the grid $c_j$ as the first state, and letting the ground equation of the grid $c_j$ be equal to the plane equation of the grid $c_j$; and

if the ground equation of the grid $c_i$ is dissimilar to the plane equation of the grid $c_j$, setting the state quantity of the grid $c_j$ as the third state, and letting the ground equation of the grid $c_j$ be equal to the ground equation of the grid $c_i$.

In some embodiments, the determining similarity between the ground equation of the grid $c_i$ and the plane equation of the grid $c_j$ comprises:

if the following two conditions are satisfied simultaneously, considering the ground equation of the grid $c_i$ to be similar to the plane equation of the grid $c_j$, otherwise, considering the ground equation of the grid $c_i$ to be dissimilar to the plane equation of the grid $c_j$,

$$w_j^T n_i > 1 - a \ , \ |b_j - g_i| < \beta$$

wherein: $w_j$ denotes a normal vector of the plane equation of the grid $c_j$, $n_i$ denotes a normal vector of the ground equation of the grid $c_i$, $a$ denotes an allowable deviation tolerance value of the normal vector of the plane equation from the normal vector of the ground equation, $b_j$ denotes an offset term of the plane equation of the grid $c_j$, $g_i$ denotes an offset term of the ground equation of the grid $c_i$, and $\beta$ denotes an allowable deviation tolerance value of the offset term of the plane equation from the offset term of the ground equation.

In some embodiments, the determining whether the point cloud in each grid is a ground point cloud according to the ground equation of each grid comprises:

for the grid $c_i$, if a point $[x, y, z]^T$ in the point cloud within the grid $c_i$ satisfies

$$| \ n_i^T [x, \ y, \ z]^T + g_i \ | < \gamma$$

, considering the point to be a ground point, otherwise, considering the point to be a non-ground point,

wherein: $n_i$ denotes a normal vector of the ground equation of the grid $c_i$, $g_i$ denotes an offset term of the ground equation of the grid $c_i$, and $\gamma$ denotes a maximum distance from a ground point cloud to a ground equation.

In some embodiments, the ground equation of the center grid is

$$n_0^T [x, \ y, \ z]^T + g_0 = 0$$

, wherein: $n_0 = [0, 0, 1]^T$, $g_0$ is a height of the radar from the ground, and $[x, y, z]^T$ denotes a position of a point in the center grid.

In some embodiments, the plane equation corresponding to the point cloud in each grid is fitted by using a random sample consensus algorithm or a singular value decomposition algorithm.

In some embodiments, the region of interest is divided into a plurality of grids according to a top view angle, and the point clouds in the region of interest are put into the corresponding grids according to position coordinates of the point clouds.

Some embodiments of the present disclosure provide a ground point cloud segmentation apparatus, comprising: a memory; and a processor coupled to the memory, the processor configured to perform the ground point cloud segmentation method based on instructions stored in the memory.

Some embodiments of the present disclosure provide a ground point cloud segmentation apparatus, comprising:

a grid division unit configured to divide a region of interest into a plurality of grids, and put point clouds in the region of interest into the corresponding grids;

a plane equation determination unit configured to determine a plane equation corresponding to the point cloud in each grid;

a ground equation determination unit configured to take, as a central grid, a grid where a radar which performs scanning to form the point clouds is located, and determine a ground equation of the central grid; mark the central grid as a ground grid, and according to the plane equation corresponding to the point cloud in each grid and the ground equation of the central grid, by using a breadth-first grid traversal policy, perform gradual outward diffusion from the central grid and calculate a ground equation of each grid in the region of interest; and

a ground point cloud division unit configured to determine whether the point cloud in each grid is a ground point cloud according to the ground equation of each grid.

Some embodiments of the present disclosure provide an autonomous vehicle, comprising: a radar configured to perform scanning to form a point cloud, and the ground point cloud segmentation apparatus.

Some embodiments of the present disclosure provide a non-transitory computer readable storage medium storing a computer program which, when executed by a processor, implements the steps of the ground point cloud segmentation method of the embodiments.

## BRIEF DESCRIPTION OF THE DRAWINGS

The drawings that are required to be used in the description of the embodiments or the related art will be briefly described below. The present disclosure will be more clearly understood from the following detailed description, which proceeds with reference to the accompanying drawings.

Obviously, the drawings in the following description are merely some embodiments of the present disclosure and other drawings may be obtained by those of ordinary skill in the art from these drawings without paying out creative efforts.

Fig. 1 illustrates a schematic flow diagram of a ground point cloud segmentation method according to some embodiments of the present disclosure.

Fig. 2a illustrates a schematic diagram of a ground point cloud identification effect according to some embodiments of the present disclosure.

Fig. 2b is a schematic diagram illustrating a misjudgment problem of a ground grid and a non-ground grid in the case of discontinuous point clouds in the related art.

Fig. 3 is a schematic structural diagram of a ground point cloud segmentation apparatus according to some embodiments of the present disclosure.

Fig. 4 is a schematic structural diagram of a ground point cloud segmentation apparatus according to some embodiments of the present disclosure.

FIG. 5 is a schematic structural diagram of an autonomous vehicle according to some embodiments of the present disclosure.

## DETAILED DESCRIPTION

The technical solutions in the embodiments of the present disclosure will be clearly and completely described below in conjunction with the drawings in the embodiments of the present disclosure.

Unless specifically stated otherwise, the descriptions of "first", "second", "third", etc. in this disclosure are used to distinguish different objects, and are not used to indicate the meaning of size or time sequence, etc.

According to the ground point cloud segmentation method in the related art, whether a grid is a ground grid is judged according to a plane equation of a point cloud of the grid, all points in the ground grid are regarded as ground points, all points in a non-ground grid are regarded as non-ground points; if one grid includes a small part of obstacle point clouds and a large part of ground points, the grid will be determined to be a ground grid, and all points in the grid will be regarded as ground points, so that the obstacle point clouds in the grid will be misjudged to be ground points; if one grid includes a small part of ground points and a large part of the obstacle point cloud, the grid will be determined to be a non-ground grid, all points in the grid will be regarded as non-ground points, and the ground points in the grid will be misjudged to be non-ground points.

One technical problem to be solved by the embodiments of the present disclosure is: the misjudgment problem of the ground point cloud mentioned above in the related art.

In the embodiments of the present disclosure, a ground equation is calculated for each grid, and no matter whether the grid is a ground grid or a non-ground grid, the point cloud in the grid can be accurately determined to be a ground point or a non-ground point according to the ground equation of the grid, thereby solving the misjudgment problem of the ground point cloud mentioned above in the related art.

The three-dimensional coordinate system in the present disclosure may follow a convention, namely, a right-handed coordinate system, in which the radar center is taken an origin, the forward direction is X-axis, the leftward direction is Y-axis, and the upward direction is Z-axis. Taking an automatic vehicle such as an unmanned delivery vehicle as an example, if the automatic vehicle is equipped with a main radar and a gap filler radar, the center of the main radar is taken as an origin, the forward direction along the vehicle head is X-axis, the leftward direction is Y-axis, and the upward direction is Z-axis.

In the ground point cloud segmentation method provided by the embodiment of the present disclosure, for each grid, no matter whether the grid is a blank grid, a ground grid or a non-ground grid, a ground equation corresponding to the grid is calculated, and the ground equation is diffused and propagated outwards from the grid where the radar center is located, thereby improving various problems such as misjudgment in the related art. The solutions of the present disclosure and the effects thereof are described in detail below in conjunction with the accompanying drawings.

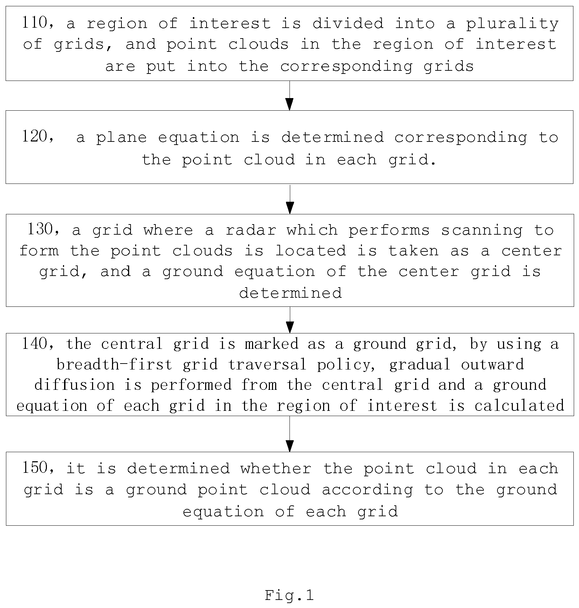

Fig. 1 illustrates a schematic flow diagram of a ground point cloud segmentation method according to some embodiments of the present disclosure. The ground point cloud segmentation method may be performed by a ground point cloud segmentation apparatus, for example.

As shown in Fig. 1, the ground point cloud segmentation method of this embodiment comprises: steps 110-150.

In step 110, a region of interest is divided into a plurality of grids, and point clouds in the region of interest are put into the corresponding grids.

The region of interest is divided into a plurality of grids, for example, M×N grids, according to a top view angle, and point clouds in the region of interest are put into corresponding grids based on position coordinates (x, y) of the point clouds.

The finer the division of the grids, the higher the accuracy of the ground point cloud segmentation, and the higher the required computing power. A reference dimension of a single grid cell is, for example, 0.2 meters ×0.2 meters, but is not limited to the illustrated example. Taking an unmanned delivery vehicle as an example, the reference value of the region of interest is a region of 30 meters respectively before and after the vehicle, 15 meters respectively left and right to the vehicle, and 60 meters ×30 meters in total, and can be divided into 300×150 grids.

In step 120, a plane equation is determined corresponding to the point cloud in each grid.

For example, a Random sample consensus (RANSAC) algorithm is used to fit the plane equation corresponding to the point cloud in each grid.

For another example, a Singular Value Decomposition (SVD) algorithm is used to fit the plane equation corresponding to the point cloud in each grid.

For a specific algorithm and the fitting process thereof, reference may be made to the related art, which are not described herein again.

In addition, for a grid with a point cloud number less than 3, the plane equation of the grid is difficult to be determined, then a plane equation of any one of its neighbor grids may be used as the plane equation of the grid.

Let the plane equation of the grid $c_i$ be

$$w_i^T \begin{bmatrix} x, & y, & z \end{bmatrix}^T + b_i = 0$$

, wherein: $w_i$ is a normalized normal vector of a plane equation of a grid $c_j$, and is a three-dimensional vector whose vector length is 1 and third component is not less than 0, $b_j$ represents an offset term of the plane equation of the grid $c_j$ and is a scalar, and $[x, y, z]^T$ denotes a position of a point in the grid ci.

In step 130, a grid where a radar which performs scanning to form the point clouds is located is taken as a center grid, and a ground equation of the center grid is determined.

According to design parameters of an automatic vehicle such as an unmanned delivery vehicle where a radar is located, the ground equation of a central grid $c_0$ is determined to be $n_0^T \begin{bmatrix} x, & y, & z \end{bmatrix}^T + g_0 = 0$. Since the radar is installed horizontally, and its xoy plane is parallel to the ground, $n_0 = [0, 0, 1]^T$, wherein: $g_0$ is a height of the radar from the ground, and $[x, y, z]^T$ denotes a position of a point in the central grid. The ground equation is an equation for describing a ground point in the grid.

The radar is, for example, a laser radar. The laser radar includes a mechanical rotary laser radar, a rotary mirror laser radar, a solid-state laser radar, etc. The mechanical rotary laser radar has a horizontal field angle of 360 degrees, long detection distance, stable measurement result, and is generally used as a main radar in the unmanned delivery vehicle. The rotary mirror laser radar and the solid-state laser radar are inferior to the mechanical rotary laser radar in both the horizontal field angle and the detection distance, but has a relatively low price, and are generally used as a gap filler radar in the unmanned delivery vehicle to supplement the main radar. The laser radar can be a multi-line laser radar, and, as an active detection sensing system, has advantages of accurately acquiring three-dimensional information of a target, high resolution, strong anti-interference capability, wide detection range, near all-weather work and the like.

In step 140, the central grid is marked as a ground grid, and according to the plane equation corresponding to the point cloud in each grid and the ground equation of the central grid, by using a breadth-first grid traversal policy, gradual outward diffusion is performed from the central grid and a ground equation of each grid in the region of interest is calculated.

In some embodiments, the performing gradual outward diffusion from the central grid and calculating a ground equation of each grid in the region of interest comprises the following steps.

First, it gradually diffuses outwards from the central grid, and for diffused adjacent grids, according to similarity between the ground equation of a grid closer to the central grid in the adjacent grids and the plane equation of a grid farther from the central grid in the adjacent grids, it is determined whether the grid farther from the central grid in the adjacent grids is a ground grid; if the ground equation of the grid closer to the central grid in the adjacent grids is similar to the plane equation of the grid farther from the central grid in the adjacent grids, it is determined that the grid farther from the central grid in the adjacent grids is the ground grid; wherein if a deviation between a normal vector of the ground equation and a normal vector of the plane equation is within a tolerance range, and a deviation between an offset term of the ground equation and an offset term of the plane equation is within the tolerance range, the ground equation is considered similar to the plane equation.

Next, it is determined the ground equation of the grid farther from the central grid in the adjacent grids according to whether the grid farther from the central grid in the adjacent grids is the ground grid. If the grid farther from the central grid in the adjacent grids is the ground grid, let the ground equation of the grid farther from the central grid in the adjacent grids be equal to the plane equation of the grid farther from the central grid in the adjacent grids, otherwise, let the ground equation of the grid farther from the central grid in the adjacent grids be equal to the ground equation of the grid closer to the central grid in the adjacent grids.

The performing gradual outward diffusion from the central grid and calculating a ground equation of each grid in the region of interest is described in more detail below in conjunction with formulas.

First, a first-in-first-out queue (queue) is maintained, with each grid in the region of interest in the queue maintaining a state quantity. The state quantity (state) includes: a first state (GROUND) indicating that the grid has been visited and identified as a ground grid, a second state (UNVISITED) indicating that the grid has not been visited, and a third state (FREE) indicating that the grid has been visited but not identified as a ground grid.

Next, the center grid $c_0$ is added to the queue, and the state quantity of the center grid $c_0$ is marked as the first state (GROUND). If the queue is not empty, the following operations continue.

Next, the grid $c_i$ in a head of the queue is taken out, and an initial value of the grid $c_i$ (or, the first grid $c_i$) is the center grid $c_0$.

Next, any grid $c_j$ adjacent to the grid $c_i$ is selected. There are 4 grids adjacent to grid $c_i$.

Next, if the state quantity of the grid $c_j$ is the second state (UNVISITED), the grid $c_j$ is added to a tail of the queue.

Next, if the state quantity of the grid $c_j$ is not the first state (i.e., not GROUND), similarity between the ground equation of the grid $c_i$ and the plane equation of the grid $c_j$ is determined.

In some embodiments, the ground equation of the grid $c_i$ is considered similar to the plane equation of the grid $c_j$ if the following two conditions are satisfied simultaneously, otherwise the ground equation of the grid $c_i$ is considered dissimilar to the plane equation of the grid $c_j$:

$$w_j^T n_i > 1- \alpha \, , \; \left| b_j - g_i \right| < \beta$$

wherein: $w_j$ denotes a normal vector of the plane equation of the grid $c_j$, $n_i$ denotes a normal vector of the ground equation of the grid $c_i$, $\alpha$ denotes an allowable deviation tolerance value of the normal vector of the plane equation from the normal vector of the ground equation, $b_j$ denotes an offset term of the plane equation of the grid $c_j$, $g_i$ denotes an offset term of the ground equation of the grid

$c_i$, and $\beta$ denotes an allowable deviation tolerance value of the offset term of the plane equation from the offset term of the ground equation. The reference value of $\alpha$ is 0.2 and the reference value of $\beta$ is 0.3, but the reference values are not limited to the examples given.

In other embodiments, the ground equation of the grid $c_i$ may also be considered similar to the plane equation of the grid $c_j$ if $w_j^T n_i > 1- \alpha$ is satisfied.

Finally, if the ground equation of the grid $c_i$ is similar to the plane equation of the grid $c_j$, the grid $c_j$ is marked as a ground grid, the state quantity of the grid $c_j$ is set as the first state (GROUND), and let the ground equation of the grid $c_j$ be equal to the plane equation of the grid $c_j$, that is, $n_j = w_j$, $g_j = b_j$. If the ground equation of the grid $c_i$ is dissimilar to the plane equation of the grid $c_j$, the state quantity of the grid $c_j$ is set as the third state (FREE), and let the ground equation of the grid $c_j$ be equal to the ground equation of the grid $c_i$, that is, $n_j = n_i$, $g_j = g_i$.

In step 150, it is determined whether the point cloud in each grid is a ground point cloud according to the ground equation of each grid.

If a distance from a point in a point cloud in a grid to the ground equation of the grid is smaller than a maximum distance from a ground point cloud to a ground equation, the point is considered to be a ground point, otherwise, the point is considered to be a non-ground point.

For any grid $c_i$, if a point $[x, y, z]^T$ in the point cloud within the grid $c_i$ satisfies

$$\left| n_i^T [x, \; y, \; z]^T + g_i \right| < \gamma$$

, the point is considered to be a ground point, otherwise, the point is considered to be a non-ground point, where $n_i$ denotes a normal vector of the ground equation of the grid $c_i$, $g_i$ denotes an offset term of the ground equation of the grid $c_i$, and $\gamma$ denotes a maximum distance from a ground point cloud to a ground equation, with a reference value of 0.1, but not limited thereto.

The above embodiments have the following effects.

(1) A ground equation is calculated for each grid, and no matter whether the grid is a ground grid or a non-ground grid, the point cloud in the grid can be accurately judged to be a ground point or a non-ground point according to the ground equation of the grid, thereby solving the misjudgment problem of the ground point cloud in the related art.

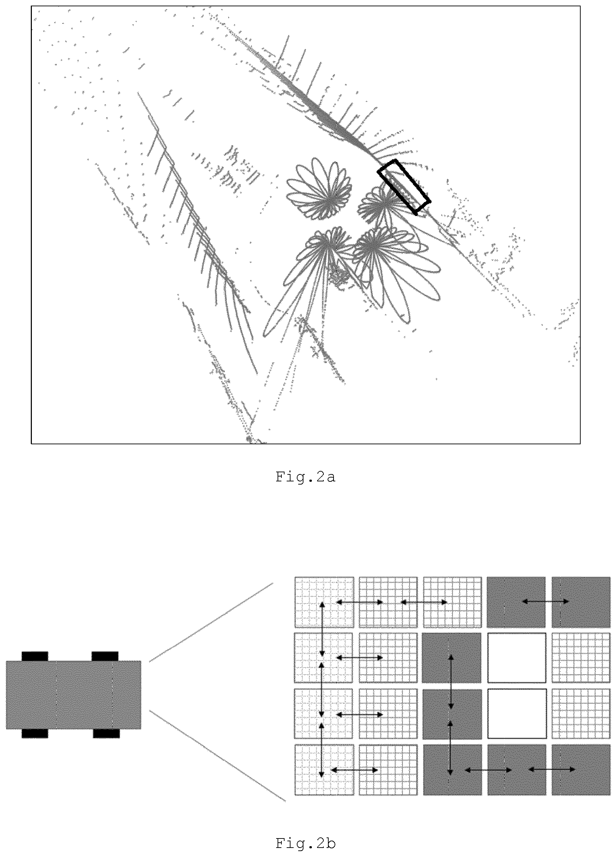

As shown in Fig. 2a, four flower shaped point clouds are point clouds of the rotating mirror laser radar, wherein the rectangular box on the right side of the flower shaped point cloud in the upper right shows a grid including curb and the ground. If according to the related art, since the number of point clouds of the curb is less than the number of ground point clouds, the grid will be judged as a ground grid, the point clouds in the grid are all judged as ground point clouds, the curb in the grid cannot be identified. If according to the solution of the present disclosure, according to the ground equation of the grid, the ground point cloud in the grid is judged to be the ground point cloud, and the point cloud of the curb in the grid is judged to be the non-ground point cloud, the curb in the grid is accurately identified.

(2) Since the blank grids also maintain the ground equation, and the ground equation is diffused from the radar outwards, the gradient change of the ground can be well adapted to, so that the ground grids and the non-ground grids can be accurately judged even in the case of discontinuous point clouds, thereby avoiding the misjudgment problem of ground grids and non-ground grids in the case of discontinuous point clouds in the related art.

The misjudgment problem of ground grids and non-ground grids in the case of discontinuous point clouds in the related art is described below with reference to Fig. 2. Due to scanning characteristics of the laser radar and the existence of a scanning blind area, phenomena of cavities and discontinuity inevitably exist in the point cloud. In Fig. 2b there is a slight slope in front of the unmanned delivery vehicle, the first column of grids (i.e. grids of dashed squares)represent horizontal ground, the second column of grids and the first one of the third column of grids and the second and third ones of the fifth column of grids together (i.e. grids of solid squares)represent the ground on the slope, the second and third blank grids of the fourth column of grids represent radar scanning blind areas, and the other grids (i.e. grey grids)represent obstacles. The blank grids are shielded by the obstacles during scanning, and thus no point cloud exists inside the blank grids. Except for the blank grids, the other grids have point clouds inside. The double-headed arrow indicates that the two grids can be judged to be similar using the similarity criterion in the related art. According to the related art, firstly, since the normal vector of the plane equation of the first column of grids is close to $[0, 0, 1]^T$, the first column of grids will be judged as ground grids, and then, since the second column of grids is similar to the first column of grids, the second column of grids will be also judged as ground grids, and similarly, the first one of the third column of grids will be also judged as a ground grid. However, since the second and third ones of the last column of grids are not directly connected to the ground grids, although belonging to the ground on the slope, they will be misjudged as non-ground grids. Therefore, the misjudgment problem of ground grids and non-ground grids in the case of discontinuous point clouds exists in the related art.

(3) By careful design of the ground grid criterion, that is, the normal vector and the offset term simultaneously meet the tolerable deviation requirement, ground grids and plane grids (such as roof grids) with a certain height can be well distinguished.

When a grid is a plane grid with a certain height, for example, the grid is located on the top of other vehicles, the point cloud in the grid is approximately distributed on a horizontal plane, and the normal vector of the grid is close to [0,0,1]. According to the determination method in the related art (a grid in which a z-value of the normal vector of the plane equation is close to 1 is regarded as a ground grid), the grid will be misjudged as a ground grid.

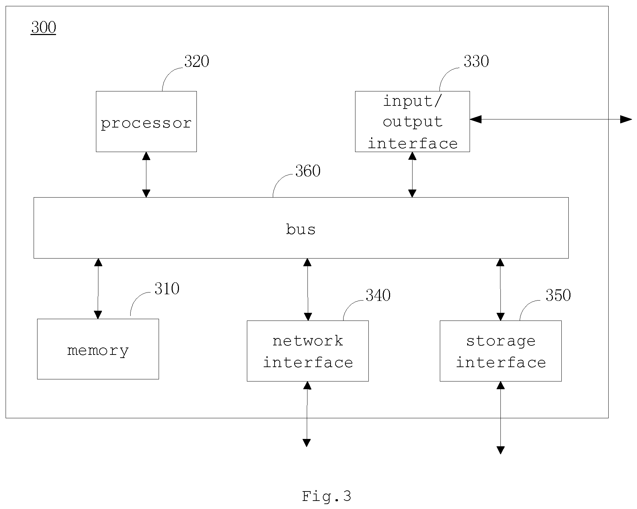

Fig. 3 is a schematic structural diagram of a ground point cloud segmentation apparatus according to some embodiments of the present disclosure.

As shown in Fig. 3, the ground point cloud segmentation apparatus 300 of this embodiment comprises: a memory 310 and a processor 320 coupled to the memory 310, the processor 320 being configured to perform the ground point cloud segmentation method of any of the foregoing embodiments based on instructions stored in the memory 310.

The memory 310 may include, for example, a system memory, a fixed non-volatile storage medium, and so on. The system memory stores, for example, an operating system, an application program, a Boot Loader (Boot Loader), and other programs.

The processor 320 may be implemented by a general-purpose processor, a Digital Signal Processor (DSP), an Application Specific Integrated Circuit (ASIC), a Field Programmable Gate Array (FPGA), or other Programmable logic devices, discrete hardware components such as discrete gates or transistors.

The ground point cloud segmentation apparatus 300 may further include an input/output interface 330, a network interface 340, a storage interface 350, and the like. These interfaces 330, 340, 350 and the memory 310 and processor 320 may be connected, for example, by a bus 360. The input/output interface 330 provides a connection interface for input/output devices such as a display, a mouse, a keyboard, and a touch screen. The network interface 340 provides a connection interface for various networking devices. The storage interface 350 provides a connection interface for external storage devices such as an SD card and a U-disk. The bus 360 can employ any of a variety of bus architectures. For example, the bus architectures include, but are not limited to, an Industry Standard Architecture (ISA) bus, a Micro Channel Architecture (MCA) bus, and a Peripheral Component Interconnect (PCI) bus.

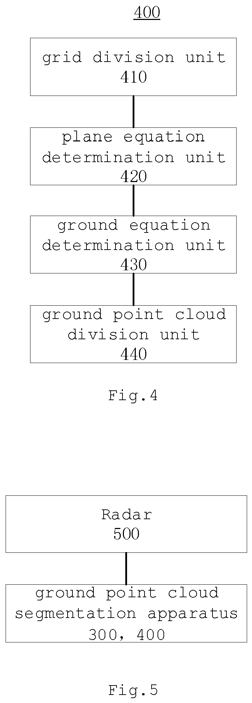

Fig. 4 is a schematic structural diagram of a ground point cloud segmentation apparatus according to some embodiments of the present disclosure.

As shown in Fig. 4, the ground point cloud segmentation apparatus 400 of this embodiment comprises: units 410-440.

A grid division unit 410 configured to divide a region of interest into a plurality of grids, and put point clouds in the region of interest into the corresponding grids.

A plane equation determination unit 420 configured to determine a plane equation corresponding to the point cloud in each grid.

A ground equation determination unit 430 configured to take, as a central grid, a grid where a radar which performs scanning to form the point clouds is located, and determine a ground equation of the central grid; mark the central grid as a ground grid, and according to the plane equation corresponding to the point cloud in each grid and the ground equation of the central grid, by using a breadth-first grid traversal policy, perform gradual outward diffusion from the central grid and calculate a ground equation of each grid in the region of interest.

A ground point cloud division unit 440 configured to determine whether the point cloud in each grid is a ground point cloud according to the ground equation of each grid.

In some embodiments, the grid division unit 410 is configured to divide the region of interest into a plurality of grids according to a top view angle, and put the point clouds in the region of interest into the corresponding grids according to position coordinates of the point clouds.

In some embodiments, the plane equation determination unit 420 is configured to fit the plane equation corresponding to the point cloud in each grid by using a random sample consensus algorithm or a singular value decomposition algorithm.

In some embodiments, the ground equation determination unit 430 is configured to gradually diffuse outwards from the central grid, and for diffused adjacent grids, according to similarity between the ground equation of a grid closer to the central grid in the adjacent grids and the plane equation of a grid farther from the central grid in the adjacent grids, determine whether the grid farther from the central grid in the adjacent grids is a ground grid; and determine the ground equation of the grid farther from the central grid in the adjacent grids according to whether the grid farther from the central grid in the adjacent grids is the ground grid.

In some embodiments, the ground equation determination unit 430, while determining whether the grid farther from the central grid in the adjacent grids is a ground grid, is configured to: if the ground equation of the grid closer to the central grid in the adjacent grids is similar to the plane equation of the grid farther from the central grid in the adjacent grids, determine that the grid farther from the central grid in the adjacent grids is the ground grid; wherein if a deviation between a normal vector of the ground equation and a normal vector of the plane equation is within a tolerance range, and a deviation between an offset term of the ground equation and an offset term of the plane equation is within the tolerance range, the ground equation is considered similar to the plane equation.

In some embodiments, the ground equation determination unit 430, while determining the ground equation of the grid farther from the central grid in the adjacent grids, is configured to: if the grid farther from the central grid in the adjacent grids is the ground grid, let the ground equation of the grid farther from the central grid in the adjacent grids be equal to the plane equation of the grid farther from the central grid in the adjacent grids, otherwise, let the ground equation of the grid farther from the central grid in the adjacent grids be equal to the ground equation of the grid closer to the central grid in the adjacent grids.

In some embodiments, the ground point cloud division unit 440 is configured to: if a distance from a point in a point cloud in a grid to the ground equation of the grid is smaller than a maximum distance from a ground point cloud to a ground equation, consider the point to be a ground point, otherwise, consider the point to be a non-ground point.

In some embodiments, the ground equation determination unit 430 is configured to:

maintain a first-in first-out queue, each grid in the region of interest in the queue maintaining a state quantity, the state quantity comprising: a first state indicating that the grid has been visited and is identified as a ground grid, a second state indicating that the grid has not been visited, and a third state indicating that the grid has been visited and is not identified as a ground grid;

add the center grid $c_0$ to the queue, mark the state quantity of the center grid $c_0$ as the first state;

take out a grid $c_i$ in a head of the queue, wherein an initial value of the grid $c_i$ is the central grid $c_0$;

select any grid $c_j$ adjacent to the grid $c_i$;

if the state quantity of the grid $c_j$ is the second state, add the grid $c_j$ to a tail of the queue;

if the state quantity of the grid $c_j$ is not the first state, determine similarity between the ground equation of the grid $c_i$ and the plane equation of the grid $c_j$;

if the ground equation of the grid $c_i$ is similar to the plane equation of the grid $c_j$, mark the grid $c_j$ as the ground grid, set the state quantity of the grid $c_j$ as the first state, and let the ground equation of the grid $c_j$ be equal to the plane equation of the grid $c_j$; and

if the ground equation of the grid $c_i$ is dissimilar to the plane equation of the grid $c_j$, set the state quantity of the grid $c_j$ as the third state, and let the ground equation of the grid $cj$ be equal to the ground equation of the grid $c_i$.

In some embodiments, the ground equation determination unit 430, while determining similarity between the ground equation of the grid $c_i$ and the plane equation of the grid $c_j$, is configured to: if the following two conditions are satisfied simultaneously, consider the ground equation of the grid $c_i$ to be similar to the plane equation of the grid $c_j$, otherwise, consider the ground equation of the grid $c_i$ to be dissimilar to the plane equation of the grid $c_j$,

$$w_j^T n_i > 1 - \alpha \, , \quad |b_j - g_i| < \beta$$

wherein: $w_j$ denotes a normal vector of the plane equation of the grid $c_i$, $n_i$ denotes a normal vector of the ground equation of the grid $c_i$, $\alpha$ denotes an allowable deviation tolerance value of the normal vector of the plane equation from the normal vector of the ground equation, $b_j$ denotes an offset term of the plane equation of the grid $c_i$, $g_i$ denotes an offset term of the ground equation of the grid $c_i$, and $\beta$ denotes an allowable deviation tolerance value of the offset term of the plane equation from the offset term of the ground equation.

In some embodiments, the ground point cloud division unit 440 is configured to:

for the grid $c_i$, if a point $[x, y, z]^T$ in the point cloud within

the grid $c_i$ satisfies $$\left| n_i^T [x, \; y, \; z]^T + g_i \right| < \gamma$$

, consider the point to be a ground point, otherwise, consider the point to be a non-ground point, wherein: $n_i$ denotes a normal vector of the ground equation of the grid $c_i$, $g_i$ denotes an offset term of the ground equation of the grid $c_i$, and $\gamma$ denotes a maximum distance from a ground point cloud to a ground equation.

In some embodiments, the ground equation of the center grid is $$n_0^T [x, \; y, \; z]^T + g_0 = 0$$ , wherein: $n_0 = [0, \, 0, \, 1]^T$, $g_0$ is a height of the radar from the ground, and $[x, y, z]^T$ denotes a position of a point in the center grid.

Fig. 5 is a schematic structural diagram of an autonomous vehicle according to some embodiments of the present disclosure. The autonomous vehicle includes, for example, an unmanned delivery vehicle and the like.

As shown in Fig. 5, the autonomous vehicle of this embodiment comprises: a radar 500 configured to perform scanning to form a point cloud, and the ground point cloud segmentation apparatus 300, 400.

If the automatic vehicle is equipped with a main radar and a gap filler radar, the three-dimensional coordinate system takes the center of the main radar as an origin, the forward direction along the vehicle head is X-axis, the leftward direction is Y-axis, and the upward direction is Z-axis.

Some embodiments of the present disclosure provide a non-transitory computer readable storage medium storing a computer program which, when executed by a processor, implements the steps of the ground point cloud segmentation method of the embodiments.

As will be appreciated by one of skill in the art, the embodiments of the present disclosure may be provided as a method, system, or computer program product. Accordingly, the present disclosure may take the form of an entirely hardware embodiment, an entirely software embodiment or an embodiment combining software and hardware aspects. Furthermore, the present disclosure may take the form of a computer program product embodied on one or more non-transitory computer-readable storage media (including, but not limited to, disk storage, CD-ROM, optical storage, etc.) having computer program code embodied therein.

The present disclosure is described with reference to flow diagrams and/or block diagrams of methods, apparatuses (systems), and computer program products according to the embodiments of the present disclosure. It will be understood that each flow and/or block of the flow diagrams and/or block diagrams, and combinations of flows and/or blocks in the flow diagrams and/or block diagrams, can be implemented by computer program instructions. These computer program instructions may be provided to a processor of a general purpose computer, special purpose computer, embedded processor, or other programmable data processing devices to produce a machine, such that the instructions, which are executed by the processor of the computer or other programmable data processing devices, create means for implementing functions specified in one or more flows in the flow diagram and/or one or more blocks in the block diagram.

These computer program instructions may also be stored in a computer-readable memory that can direct a computer or other programmable data processing devices to function in a particular manner, such that the instructions stored in the computer-readable memory produce an article of manufacture including instruction means which implement functions specified in one or more flows in the flow diagram and/or one or more blocks in the block diagram.

These computer program instructions may also be loaded onto a computer or other programmable data processing devices, to cause a series of operational steps to be performed on the computer or other programmable devices to produce a computer implemented process such that the instructions which are executed on the computer or other programmable devices provide steps for implementing functions specified in one or more flows in the flow diagram and/or one or more blocks in the block diagram.

The above description is merely preferred embodiments of the present disclosure and is not intended to limit the present disclosure, and any modification, equivalent, improvement and the like made within the spirit and scope of the present disclosure are intended to be included in the scope of the present disclosure.

**Claims**

1. A ground point cloud segmentation method, comprising:

dividing a region of interest into a plurality of grids, and putting point clouds in the region of interest into the corresponding grids;

determining a plane equation corresponding to the point cloud in each grid;

taking, as a central grid, a grid where a radar which performs scanning to form the point clouds is located, and determining a ground equation of the central grid;

marking the central grid as a ground grid, and according to the plane equation corresponding to the point cloud in each grid and the ground equation of the central grid, performing gradual outward diffusion from the central grid and calculating a ground equation of each grid in the region of interest; and

determining whether the point cloud in each grid is a ground point cloud according to the ground equation of each grid.

2. The method according to claim 1, wherein the performing gradual outward diffusion from the central grid and calculating a ground equation of each grid in the region of interest comprises:

performing gradual outward diffusion from the central grid by using a breadth-first grid traversal policy, and for diffused adjacent grids, according to similarity between the ground equation of a grid closer to the central grid in the adjacent grids and the plane equation of a grid farther from the central grid in the adjacent grids, determining whether the grid farther from the central grid in the adjacent grids is a ground grid; and

determining the ground equation of the grid farther from the central grid in the adjacent grids according to whether the grid farther from the central grid in the adjacent grids is the ground grid.

3. The method according to claim 2, wherein the determining whether the grid farther from the central grid in the adjacent grids is a ground grid comprises:

if the ground equation of the grid closer to the central grid in the adjacent grids is similar to the plane equation of the grid farther from the central grid in the adjacent grids, determining that the grid farther from the central grid in the adjacent grids is the ground grid;

wherein if a deviation between a normal vector of the ground equation and a normal vector of the plane equation is within a tolerance range, and a deviation between an offset term of the ground equation and an offset term of the plane equation is within the tolerance range, the ground equation is considered similar to the plane equation.

4. The method according to claim 2, wherein the determining the ground equation of the grid farther from the central grid in the adjacent grids comprises:

if the grid farther from the central grid in the adjacent grids is the ground grid, letting the ground equation of the grid farther from the central grid in the adjacent grids be equal to the plane equation of the grid farther from the central grid in the adjacent grids, otherwise, letting the ground equation of the grid farther from the central grid in the adjacent grids be equal to the ground equation of the grid closer to the central grid in the adjacent grids.

5. The method according to claim 1, wherein the determining whether the point cloud in each grid is a ground point cloud according to the ground equation of each grid comprises:

if a distance from a point in a point cloud in a grid to the ground equation of the grid is smaller than a maximum distance from a ground point cloud to a ground equation, considering the point to be a ground point, otherwise, considering the point to be a non-ground point.

6. The method according to claim 2, wherein the performing gradual outward diffusion from the central grid and calculating a ground equation of each grid in the region of interest comprises:

maintaining a first-in first-out queue, each grid in the region of interest in the queue maintaining a state quantity, the state quantity comprising: a first state indicating that the grid has been visited and is identified as a ground grid, a second state indicating that the grid has not been visited, and a third state indicating that the grid has been visited and is not identified as a ground grid;

adding the center grid $c_0$ to the queue, marking the state quantity of the center grid $c_0$ as the first state;

taking out a grid $c_i$ in a head of the queue, wherein an initial value of the grid $c_i$ is the central grid $c_0$;

selecting any grid $c_j$ adjacent to the grid $c_i$;

if the state quantity of the grid $c_j$ is the second state, adding the grid $c_j$ to a tail of the queue;

if the state quantity of the grid $c_j$ is not the first state, determining similarity between the ground equation of the grid $c_i$ and the plane equation of the grid $c_j$;

if the ground equation of the grid $c_i$ is similar to the plane equation of the grid $c_j$, marking the grid $c_j$ as the ground grid, setting the state quantity of the grid $c_j$ as the first state, and letting the ground equation of the grid $c_j$ be equal to the plane equation of the grid $c_j$; and

if the ground equation of the grid $c_i$ is dissimilar to the plane equation of the grid $c_j$, setting the state quantity of the grid $c_j$ as the third state, and letting the ground equation of the grid $c_j$ be equal to the ground equation of the grid $c_i$.

7. The method according to claim 6, wherein the determining similarity between the ground equation of the grid $c_i$ and the plane equation of the grid $c_j$ comprises:

if the following two conditions are satisfied simultaneously, considering the ground equation of the grid $c_i$ to be similar to the plane equation of the grid $c_j$, otherwise, considering the ground equation of the grid $c_i$ to be dissimilar to the plane equation of the grid $c_j$,

$$ w_j^T n_i > 1 - a, \quad |b_j - g_i| < \beta $$

wherein: $w_j$ denotes a normal vector of the plane equation of the grid $c_j$, $n_i$ denotes a normal vector of the ground equation of the grid $c_i$, $a$ denotes an allowable deviation tolerance value of the normal vector of the plane equation from the normal vector of the ground equation, $b_j$ denotes an offset term of the plane equation of the grid $c_j$, $g_i$ denotes an offset term of the ground equation of the grid $c_i$, and $\beta$ denotes an allowable deviation tolerance value of the offset term of the plane equation from the offset term of the ground equation.

8. The method according to claim 6, wherein the determining whether the point cloud in each grid is a ground point cloud according to the ground equation of each grid comprises:

for the grid $c_i$, if a point $[x, y, z]^T$ in the point cloud within the grid $c_i$ satisfies

$$ | n_i^T [x, y, z]^T + g_i | < \gamma $$

, considering the point to be a ground point, otherwise, considering the point to be a non-ground point, wherein: $n_i$ denotes a normal vector of the ground equation of the grid $c_i$, $g_i$ denotes an offset term of the ground equation of the grid $c_i$, and $\gamma$ denotes a maximum distance from a ground point cloud to a ground equation.

9. The method according to claim 1, wherein the ground equation of the center grid is

$$ n_0^T [x, y, z]^T + g_0 = 0 $$

Wherein: $n_0 = [0, 0, 1]^T$, $g_0$ is a height of the radar from the ground, and $[x, y, z]^T$ denotes a position of a point in the center grid.

10. The method according to claim 1, wherein the plane equation corresponding to the point cloud in each grid is fitted by using a random sample consensus algorithm or a singular value decomposition algorithm.

11. The method according to claim 1, wherein the region of interest is divided into a plurality of grids according to a top view angle, and the point clouds in the region of interest are put into the corresponding grids according to position coordinates of the point clouds.

12. A ground point cloud segmentation apparatus, comprising:

a memory; and
a processor coupled to the memory, the processor configured to perform the ground point cloud segmentation method according to any of claims 1 to 11 based on instructions stored in the memory.

13. A ground point cloud segmentation apparatus, comprising:

a grid division unit configured to divide a region of interest into a plurality of grids, and put point clouds in the region of interest into the corresponding grids;
a plane equation determination unit configured to determine a plane equation corresponding to the point cloud in each grid;
a ground equation determination unit configured to take, as a central grid, a grid where a radar which performs scanning to form the point clouds is located, and determine a ground equation of the central grid; mark the central grid as a ground grid, and according to the plane equation corresponding to the point cloud in each grid and the ground equation of the central grid, by using a breadth-first grid traversal policy, perform gradual outward diffusion from the central grid and calculate a ground equation of each grid in the region of interest; and
a ground point cloud division unit configured to determine whether the point cloud in each grid is a ground point cloud according to the ground equation of each grid.

14. An autonomous vehicle, comprising:

a radar configured to perform scanning to form a point cloud, and
the ground point cloud segmentation apparatus according to claim 12 or 13.

15. A non-transitory computer readable storage medium storing a computer program which, when executed by a processor, implements the steps of the ground point cloud segmentation method according to any of claims 1 to 11.

110, a region of interest is divided into a plurality of grids, and point clouds in the region of interest are put into the corresponding grids

120, a plane equation is determined corresponding to the point cloud in each grid.

130, a grid where a radar which performs scanning to form the point clouds is located is taken as a center grid, and a ground equation of the center grid is determined

140, the central grid is marked as a ground grid, by using a breadth-first grid traversal policy, gradual outward diffusion is performed from the central grid and a ground equation of each grid in the region of interest is calculated

150, it is determined whether the point cloud in each grid is a ground point cloud according to the ground equation of each grid

Fig.1

Fig.2a

Fig.2b

300

320

processor

330

input/
output
interface

360

bus

310

memory

340

network
interface

350

storage
interface

Fig.3

400

| grid division unit 410 |
| --- |

| plane equation determination unit 420 |
| --- |

| ground equation determination unit 430 |
| --- |

| ground point cloud division unit 440 |
| --- |

Fig.4

| Radar 500 |
| --- |

| ground point cloud segmentation apparatus 300, 400 |
| --- |

Fig.5

## INTERNATIONAL SEARCH REPORT

| International application No. |
|---|
| **PCT/CN2022/091460** |

**A. CLASSIFICATION OF SUBJECT MATTER**

G06T 17/20(2006.01)i

According to International Patent Classification (IPC) or to both national classification and IPC

**B. FIELDS SEARCHED**

Minimum documentation searched (classification system followed by classification symbols)

G06T

Documentation searched other than minimum documentation to the extent that such documents are included in the fields searched

Electronic data base consulted during the international search (name of data base and, where practicable, search terms used)

WPABSC; CNTXT; CNABS; ENTXTC; OETXT; WPABS; ENTXT; DWPI; VEN; CJFD; IPCOM: 点云, 网格, 地面, 分割, 误判, 每个网格, 地面方程, 中心网格, 扩散, 遍历, 相邻网格, 相似性, 偏差, 偏置; point cloud, grid, segment, each grid, ground, surface, equation, center grid, spread, traverse, ergod, adjacent, similarity, deviation, bias

**C. DOCUMENTS CONSIDERED TO BE RELEVANT**

| Category* | Citation of document, with indication, where appropriate, of the relevant passages | Relevant to claim No. |
|---|---|---|
| PX | CN 113436336 A (JD KUNPENG (JIANGSU) TECHNOLOGY CO., LTD.) 24 September 2021 (2021-09-24) description, paragraphs 4-47 | 1-15 |
| A | CN 111179274 A (SHENZHEN YIQING INNOVATION TECHNOLOGY CO., LTD.) 19 May 2020 (2020-05-19) description, paragraphs 59-91 | 1-15 |
| A | CN 106529469 A (NORTH CHINA UNIVERSITY OF WATER RESOURCES AND ELECTRIC POWER) 22 March 2017 (2017-03-22) entire document | 1-15 |
| A | CN 111445472 A (CLOUDMINDS TECHNOLOGIES CHENGDU CO., LTD.) 24 July 2020 (2020-07-24) entire document | 1-15 |
| A | CN 111353969 A (CHANGSHA INTELLIGENT DRIVING INSTITUTE LTD.) 30 June 2020 (2020-06-30) entire document | 1-15 |

☑ Further documents are listed in the continuation of Box C.   ☑ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **30 June 2022** | **15 July 2022** |

| Name and mailing address of the ISA/CN | Authorized officer |
|---|---|
| **China National Intellectual Property Administration (ISA/ CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**

International application No.

**PCT/CN2022/091460**

**C.    DOCUMENTS CONSIDERED TO BE RELEVANT**

| Category* | Citation of document, with indication, where appropriate, of the relevant passages | Relevant to claim No. |
|---|---|---|
| A | KR 20130037996 A (ELECTRONICS AND TELECOMMUNICATIONS RESEARCH INSTITUTE) 17 April 2013 (2013-04-17)<br>entire document | 1-15 |
| A | US 2019179024 A1 (LUMINAR TECHNOLOGIES, INC.) 13 June 2019 (2019-06-13)<br>entire document | 1-15 |

Form PCT/ISA/210 (second sheet) (January 2015)

### INTERNATIONAL SEARCH REPORT
Information on patent family members

International application No.

**PCT/CN2022/091460**

| Patent document cited in search report | | | Publication date (day/month/year) | Patent family member(s) | | | Publication date (day/month/year) |
|---|---|---|---|---|---|---|---|
| CN | 113436336 | A | 24 September 2021 | None | | | |
| CN | 111179274 | A | 19 May 2020 | None | | | |
| CN | 106529469 | A | 22 March 2017 | CN | 106529469 | B | 03 January 2020 |
| CN | 111445472 | A | 24 July 2020 | None | | | |
| CN | 111353969 | A | 30 June 2020 | None | | | |
| KR | 20130037996 | A | 17 April 2013 | US | 2013089259 | A1 | 11 April 2013 |
| | | | | US | 9076219 | B2 | 07 July 2015 |
| | | | | KR | 101740259 | B1 | 29 May 2017 |
| US | 2019179024 | A1 | 13 June 2019 | US | 2019178988 | A1 | 13 June 2019 |
| | | | | US | 2019176841 | A1 | 13 June 2019 |
| | | | | US | 2019179317 | A1 | 13 June 2019 |
| | | | | WO | 2019118542 | A2 | 20 June 2019 |
| | | | | US | 2019179023 | A1 | 13 June 2019 |
| | | | | US | 2019179026 | A1 | 13 June 2019 |
| | | | | US | 2019179027 | A1 | 13 June 2019 |
| | | | | US | 2019179025 | A1 | 13 June 2019 |
| | | | | US | 2019180502 | A1 | 13 June 2019 |
| | | | | US | 10754037 | B2 | 25 August 2020 |

Form PCT/ISA/210 (patent family annex) (January 2015)

**EP 4 361 958 A1**

## REFERENCES CITED IN THE DESCRIPTION

**Patent documents cited in the description**

- CN 202110691334